# EUROPEAN PATENT APPLICATION

(11) **EP 1 072 979 A2**
(43) Date of publication of application: **31.01.2001**
(21) Application number: 00306057.1
(22) Date of filing: 17.07.2000
(51) Int. Cl.: G06F 11/34

(54) **Method of monitoring runtime usage of demo evaluation software**

(30) Priority: 27.07.1999 US 361238
(71) Applicant: LUCENT TECHNOLOGIES INC., Murray Hill, New Jersey 07974-0636 (US)
(72) Inventor: Broutin, Scott L., Kutztown, PA 19530 (US); Dautartas, Mindaugas, Alburtis, PA 18011 (US); Stayt, John W. Jr., Schnecksville, PA 18078 (US)
(74) Representative: Watts, Christopher Malcolm Kelway, Dr.

(57) **Abstract**

Monitoring clock ticks of a CPU ("computer processing unit") during its execution of a software program is provided. The clock ticks are monitored, and an elapsed runtime is updated, throughout execution of the program on a periodic basis. The elapsed runtime is stored in a hidden file or within a key inside a software registry. Updating runtime on a periodic basis ensures accurate tracking of runtime usage even in the event of a program crash, allowing the user to restart the program without the penalty of lost runtime. The software package will continue to operate until the elapsed runtime exceeds a predetermined evaluation time, at which point the software package is fully or partially disabled until it is registered by the user. An alternative to the hidden tracking file or registry is to use a World Wide Web push/pull technology to store runtime information at the software provider's site, allowing the provider to modify the evaluation period on a pay-per-use basis.

## Description

### Field Of The Invention

The present invention relates generally to the field of computer software and, more particularly to a method of monitoring the runtime usage of demonstration ("demo") evaluation software.

### Description Of The Related Art

In today's business environment it is very useful to allow potential customers to try-out or evaluate a new software package before they purchase the software. Typically, the software provider furnishes a demonstration or evaluation software package, which is representative of the actual software to be purchased, to the potential customer. The customer is given a predetermined time period to evaluate the software, after which usage of the demonstration software must terminate unless the provider gives the customer an extension or the customer purchases the actual software.

Sometimes, the demonstration software is a watered down version of the actual software package. That is, the demonstration will lack some of the functionality that would be provided in the actual software package. This serves as a "teaser" used to entice the customer. Other times, it may be desirable to provide the actual software package as the demonstration package. Either way, the customer is receiving a working version of the actual software and care must be taken to ensure that the customer does not retain and continue to use the demonstration software after the evaluation period expires in the event that the software is not purchased.

Several methods have been proposed to limit the usage of the demonstration software. Typically, these methods involve disabling the software after the evaluation period expires (i.e., they utilize a "demonstration timeout"). For example, one method involves providing a timeout based on the number of times the demonstration software has been used. This is achieved by determining the number of times the demonstration software has been started. Another method uses a timeout determined relative to the date of package installation.

These methods are not without their shortcomings. For example, the timeouts are not based on actual runtime usage. That is, they do not monitor or determine the user's actual usage of the demonstration package. In a method based on dates, a user may install the demonstration package, but not have the opportunity to evaluate the software until a later date. Thus, the user's evaluation time is dramatically reduced. In addition, the user may roll-back the system date on the computer running the demonstration and thus, trick the software into operating beyond the demonstration period. In a method based on number of times the package is started, the user may initiate the program one time and allow it to run continually, without re-starting it, and thus, extends the demonstration period. Conversely, if a program system crash occurs, the user is required to re-start the demonstration, which reduces the usage time. A demonstration timeout method based on actual runtime usage of the demonstration software would alleviate these shortcomings. Accordingly, there is a need and desire for a method of monitoring the usage of demonstration software that is based on actual runtime usage.

Sometimes, it is desirable for the provider to extend the demonstration period beyond the original period. Often times, the user does not get to fully evaluate the demonstration package. Typically, this is due in part to the user's inexperience with the package. Other times, however, the user is called away on other business or simply cannot evaluate the software within the allotted period. The user is then forced to contact the provider to obtain a new demonstration package with a new evaluation period. This may entail shipping an entire new copy of the demo software, which would require the user to install the new copy. This is inconvenient and inefficient for both the provider and user. Accordingly, there is a need and desire for a method of extending the evaluation period of demonstration software in a simple, efficient and convenient manner.

### Summary Of The Invention

The present invention provides a method of monitoring the usage of demonstration software that is based on actual runtime usage.

The present invention also provides a method of extending the evaluation period of demonstration software in a simple, efficient and convenient manner while allowing the provider to monitor and maintain statistical data on runtime usage.

The above and other features and advantages of the invention are achieved by monitoring clock ticks of a CPU ("computer processing unit") during its execution of a software program. The clock ticks are monitored, and an elapsed runtime is updated, throughout execution of the program on a periodic basis. The elapsed runtime is stored in a hidden file or within a key inside a software registry (database). Updating runtime on a periodic basis ensures accurate tracking of runtime usage even in the event of a program crash, allowing the user to restart the program without the penalty of lost runtime. The software package will continue to operate until the elapsed runtime exceeds a predetermined evaluation time, at which point the software package is fully or partially disabled until it is registered by the user. An alternative to the hidden tracking file or registry is to use a World Wide Web push/pull technology to store runtime information at the software provider's site, allowing the provider to modify the evaluation period on a pay-per-use basis.

### Brief Description Of The Drawings

The foregoing and other advantages and features of the invention will become more apparent from the detailed description of the preferred embodiments of the invention given below with reference to the accompanying drawings in which:
Fig. 1 illustrates in flow chart form an exemplary method of creating a tracking file in accordance with the present invention;
Fig. 2 illustrates an exemplary tracking file used by the method of the present invention;
Figs. 3a and 3b illustrate in flowchart form an exemplary method of monitoring the usage of demonstration software according to one embodiment of the present invention;
Fig. 4 illustrates a processor-based system in which the method of the present invention may be executed;
Fig. 5 illustrates a connection between a customer and a software provider over the Internet; and
Fig. 6 illustrates in flowchart form an exemplary method of monitoring the usage of demonstration software according to another embodiment of the present invention.

### Detailed Description Of Preferred Embodiments

The present invention is suitable for tracking the actual runtime usage of a software program, and is particularly useful for the tracking the actual runtime usage of a demonstration program, which typically has a limited evaluation time. Although the present invention will be described herein with reference to a demonstration software program or package, it should be appreciated that it is suitable for any software application in which the monitoring of runtime usage is required or desired.

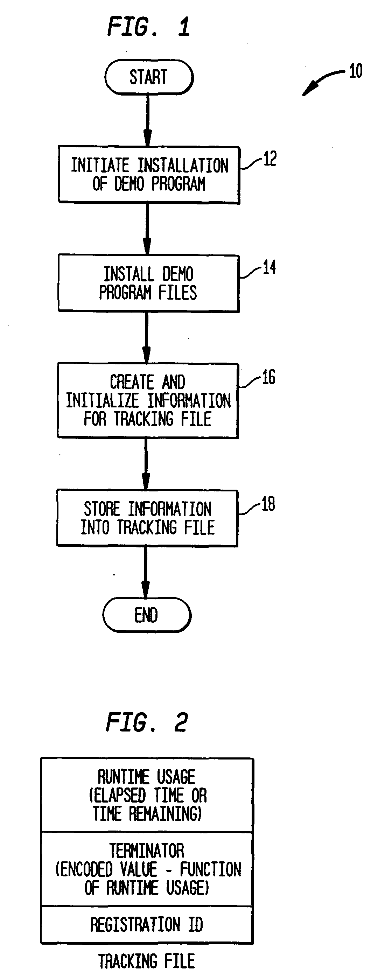

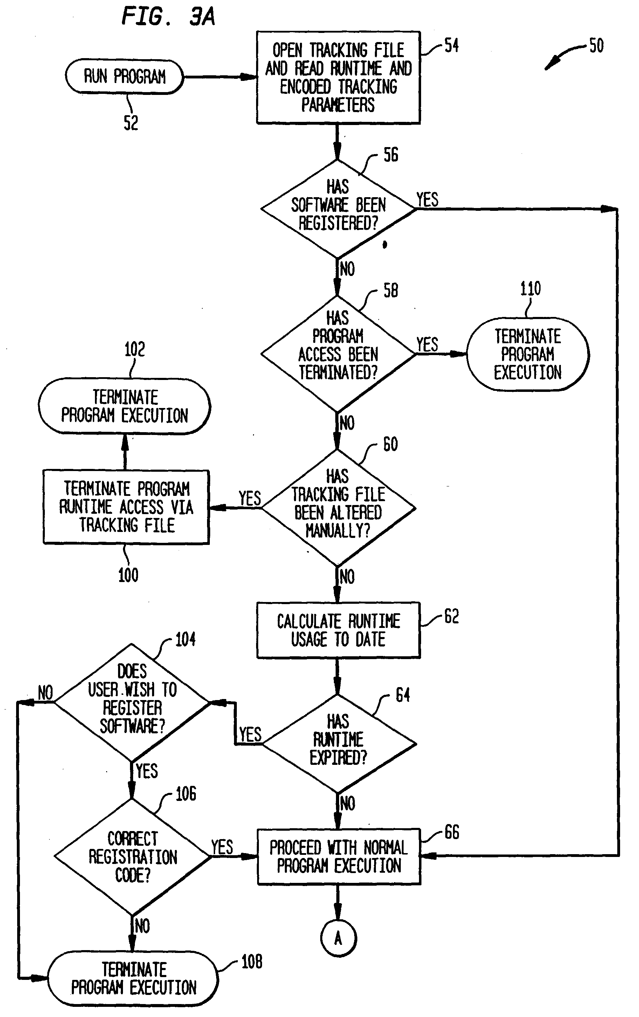

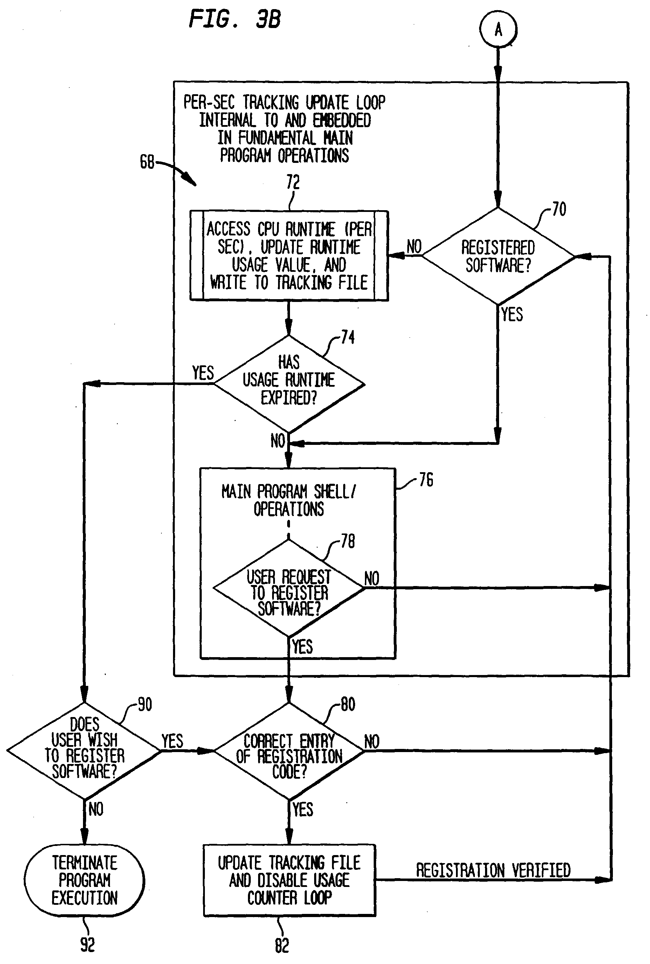

Fig. 1 illustrates in flow chart form an exemplary method 10 of creating a tracking file in accordance with the present invention. An exemplary tracking file is illustrated in Fig. 2. As shown, the tracking file contains three entries - runtime usage, terminator and registration identification (ID). It should be noted that the registration ID entry is optional (described below). The runtime usage entry will contain the user's accumulated runtime usage for the demonstration (i.e., elapsed time) or it can contain the usage time remaining. This may be expressed, for example, as seconds or total clock ticks. The terminator entry will typically contain an encoded value corresponding to the runtime usage entry (i.e., it is a function of the runtime usage stored in the first entry). When decoded, the value stored in the terminator entry must match the value stored in the runtime usage entry, otherwise program execution will be terminated (explained in more detail below). The registration ID entry will contain an encoded value representing a valid registration ID. As noted above, the registration ID does not have to reside in the tracking file. Instead, it could be hard-coded into the demonstration program. As will be described below in more detail with reference to Figs. 3a and 3b, the contents of the tracking file will be used by the method 50 of the present invention to keep track of the actual runtime usage of a demonstration software program and to make decisions as to whether the program should be terminated.

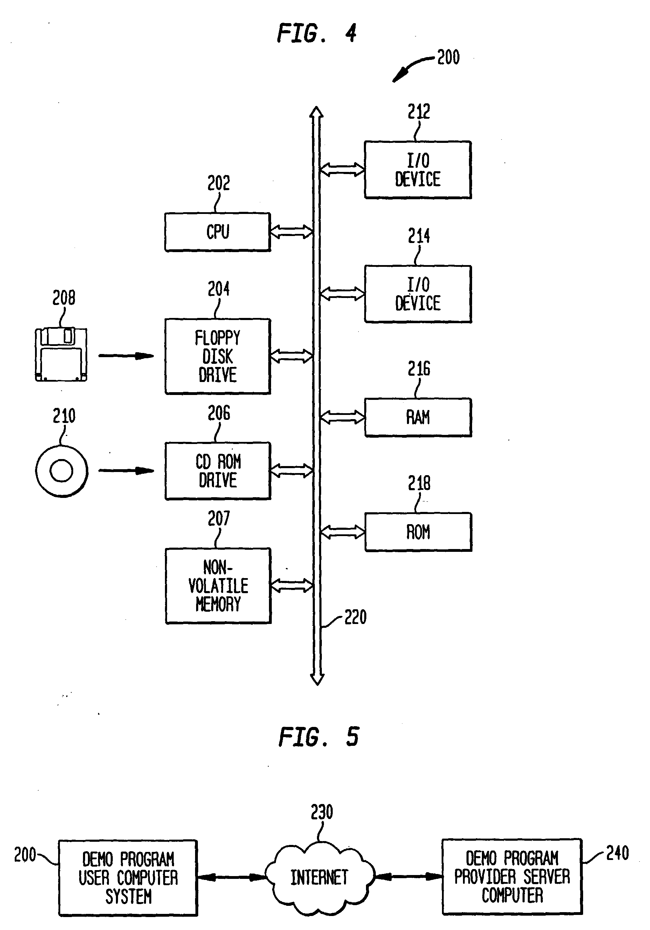

Referring again to Fig. 1, it is desirable for the tracking file to be created during the installation of the demonstration software program on the user's computer (or on a provider's web site as will be discussed below with reference to Fig. 5). It must be noted that the manner in which the demonstration program is received for installation by the user is immaterial. For example, the program can be stored on a floppy disk or CD-ROM ("compact disc read only memory"), downloaded from a server computer over a network, such as the Internet, or any other suitable medium. Moreover, the demonstration program can be a compressed file, i.e., a "zipped" or "stuffed" file, requiring the use of a utility program to uncompress or to "unzip" it, or the demonstration program can be an executable file which installs itself upon initiation by the user. The type of file is irrelevant as long as the demonstration program, along with the tracking file, can be installed according to the method 10. For simplicity purposes, however, the term "installation disc" is used to refer to the medium containing the files necessary to install the demonstration program, along with the tracking file. Similarly, the term "installation program" will refer to the program, executable, utility, etc. required to install the demonstration program, along with the tracking file, from the installation disc.

Once the user has the installation disc, the method 10 can begin. Initially, at step 12, the user initiates the installation of the demonstration program from the installation disc by executing the installation program. During the installation, the demo program files will be placed into an appropriate directory on the user's hard drive or other storage medium of suitable capacity (step 14). The installation program will also create and initialize the information required for the tracking file (step 16). The information is then stored into a hidden file which serves as the tracking file illustrated in Fig. 2 (step 18). Alternatively, the information can be stored within a key inside a software registry as is known in the art. The one requirement is that the stored tracking information is capable of being accessed by the demonstration program (described below with reference to Figs. 3a and 3b). For simplicity purposes, the remainder of the description will refer to the tracking file, but it should be apparent that the same descriptions apply to the registry. Once the tracking file is created and the demonstration program installed, the method of the present invention can be executed.

Figs. 3a and 3b illustrate an exemplary method 50 of monitoring the usage of demonstration software according to one embodiment of the present invention. It is desirable that the steps 54 to 66 and 100 to 108 of the method 50 be executed prior to, or as part of, the startup/initialization process of the demonstration program. It should be noted that steps 54 to 66 and 100 to 108 of the method 50 can be executed as an independent function call of the demonstration program or integral with other instructions/functions of the demonstration program. Initially, the user runs the demonstration program (step 52). When the program is running, the tracking file is opened and runtime and other encoded tracking parameters are read from the file (step 54). All encoded parameters are decoded. The exact method or tool used to encode/decode the parameters is not important and any commercially available or unique encoding/decoding methods can be used. As will be described below, these parameters are exchanged with the tracking file and are constantly kept updated by the method 50.

At step 56, the method will next determine whether the software has been registered by examining the tracking file for a valid registration ID entry. If the software has been registered, i.e., a valid registration ID value has been found in the tracking file, the method 50 will proceed with normal demonstration program execution at step 66. Otherwise, the method 50 will determine whether access to the demonstration program has been terminated 58. This occurs by comparing the value of the decoded terminator entry to a predetermined termination code. Care must be taken to prevent the unencrypted values from being examined in plain form in random access memory (RAM). If the terminator matches the termination code, then access to the demonstration program has been terminated When the program access has been terminated, the method 50 proceeds to step 110, where the demonstration program execution (and the method 50) is terminated. Where, however, it is determined at step 58 that program access has not been terminated the method proceeds to step 60.

Next, the method 50 will check to see if the tracking file has been altered manually (step 60). This occurs by checking the value of the decoded terminator entry to the value of the runtime usage entry. If the two values do not match, the user most likely has manually altered the runtime usage entry. Since the user does not know how the terminator value is being encoded, the user is incapable of altering the terminator in a manner similar to the runtime usage entry making it easy to detect the fraud. It should be noted that steps 58 and 60 can be combined if warranted since they both involve the use of the terminator entry. Likewise, two separate terminator entries could also be used if so desired. It should be appreciated, that by keeping steps 58 and 60 separate, the provider can distinguish between an honest user that ran out of time and a dishonest user who has tried to extend the evaluation time for free and without the provider's consent.

If it is determined at step 60 that the tracking has been altered manually, program runtime access will be terminated via the tracking file at step 100 and the current execution of the demonstration program (and the method 50) is also terminated at step 102. That is, the special encoded terminator associated with the predetermined termination code is written into the track file so that upon the next execution of the method 50 and the demonstration program, the program will terminate at step 110 (described above). Otherwise, if it is determined at step 60 that the tracking has not been altered, the method 50 calculates the runtime usage to date by inspecting the runtime usage entry (step 62). As noted above, the value stored in the runtime usage entry can be clock ticks, seconds or any other indication of runtime usage. Thus, the entry may require a conversion or quick calculation to determine the actual runtime usage of the demonstration program to date.

At step 64, it is determined whether the runtime usage has expired. That is, if the value of the runtime usage is greater than the predetermined evaluation usage. If it is determined that the runtime usage has not expired, the method 50 proceeds with normal program execution at step 66. If it is determined that the runtime has expired, the user gets a chance to register the program (i.e., purchase the software) at step 104. If, it is determined at step 104 that the user does not wish to register the program, the demonstration program execution (and the method 50) will be terminated at step 108.

If it is determined that the user desires to register the demonstration program at step 104, the user would be able to enter a registration code. At step 106, the entered code is compared to a predetermined registration ID stored within the demonstration program or one of its data files. If the two codes match, an encoded version of the registration ID is written into the tracking file (or a provider's web site) and the method 50 proceeds with normal program execution at step 66. If the two codes do not match, the method continues at step 108 where demonstration program execution (and the method 50) are terminated. Termination as opposed to continual looping lessens the chance of the user entering arbitrary coded values until the correct one is found.

It should be appreciated that the registration process could be accomplished in several ways and is not limited to the sequence of steps previously described. For example, registration could occur by the use of dongles, smart cards, timed dongles, key discs, timed sequence (radio keys) and magnetic strip readers (e.g., credit card reader) as is known in the art.

With reference to Fig. 3b, an embedded updating loop 68 for continually tracking/updating runtime usage is shown as part of the method 50. This loop 68 is embedded in the fundamental main program operations of the demonstration program. At step 70, if the demonstration software is not registered the loop 68 updates the runtime usage value and writes it to the tracking file. In addition, the terminator, which at this point will be an encoded value representing the runtime usage value, is also updated and written into the file. The runtime usage is updated by accessing the clock ticks of the CPU executing the program. The manner in which the clock ticks are accessed is dependent upon, among other things, the software language used to script the method 50 and the demonstration program. It should be noted that the language or compilers used is not important as long as the CPU clock ticks, or CPU time since the demonstration program began executing, can be readily determined.

In the present embodiment, it is desired that the loop 68 will continually update the tracking file on a per second basis (i.e., it is periodically executed once every second). Thus, the loop 68 will be incorporated into the demonstration program, such that it can be executed periodically every second. It should be noted that one second is a desired update rate, but that any rate could be used (faster or slower) and the invention is not to be limited to any specific update rate. A separate process, object or thread may also be used to implement method 50 so it will not impact the time critical sections of the demo evaluation software.

At step 74 it is determined whether the usage runtime has expired. That is, if the value of the runtime usage is greater than the predetermined evaluation usage. If it is determined that the runtime usage has not expired, the method 50 proceeds to the main program shell/operations of the demonstration program at step 76. Sometime during the main program operation, it is determined whether the user wishes to register the demonstration program via a user initiated request (step 78). As noted above, the loop 68 is embedded within the demonstration program. Thus, when and where the steps 70 to 78 are actually executed is not important as long as they are executed during the execution of some fundamental operation of the demonstration program, thus allowing the loop 68 to accurately monitor, determine and update the actual runtime usage.

If at step 78 it is determined that the user does not wish to register the software, the method 50 continues at step 70 for another pass through the loop 68. If at step 78 it is determined that the user desires to register the program, the user would be able to enter a registration code. At step 80, the entered code is compared to the predetermined registration ID for the demonstration program. If the two codes match, the track file is updated with an encoded version of the registration ID, which essentially disables the loop 68 from monitoring and updating the runtime usage. The method then continues at step 70 for another pass through the loop 68, but as noted earlier the loop 68 is essentially disabled since steps 72 and 74 will no longer be executed.

If at step 80 it is determined that the input registration code does not match the predetermined code, the method 50 continues at step 70 for another pass through the loop 68, which has not been disabled. Again, it is desirable for the loop to be executed once a second. Note, it is possible to add a check to determine the number of times the user has attempted to register the demo software. If the user has exceeded a predetermined number of attempts, the program will be terminated (i.e., the method 50 could continue at step 92 if the user has incorrectly attempted to register the demo more than a predetermined number of times). Termination as opposed to continual looping lessens the chance of the user entering arbitrary coded values until the correct one is found.

If at step 74, it is determined that the runtime usage has expired, the method 50 proceeds to step 90 where it is determined if the user wishes to register the demonstration program. If the user does not wish to register the program, the method 50 continues at step 92 where demonstration program execution (and the method 50) are terminated. If at step 90 it is determined that the user wishes to register the program, the method continues at step 80 (described above).

It should be noted that the method 50 is part of, or called as a function from, the executing demonstration program. Thus, user inputs, such as the registration ID will be fashioned in accordance with the demo program. Thus, they can be keyboard, mouse or other type entries and the manner in which the user inputs information into the method 50 and the demo is not important.

Fig. 4 illustrates a processor-based system 200 in which the method 50 (Figs. 3a and 3b) of the present invention may be executed. The computer system 200 includes a central processing unit (CPU) 202 that communicates with an input/output (I/O) device 212 over a bus 220. It should be notes that only a single bus 220 is illustrated, but that it may include more than one bus and bus bridges as is currently known in the art. A second I/O device 214 is illustrated, but is not necessary. The system 200 also includes non-volatile memory 207, random access memory (RAM) 216, read only memory (ROM) 218, and may include peripheral devices such as a floppy disk drive 204 and a CD-ROM drive 206 that also communicate with the CPU 202 over the bus 220. It must be noted that the exact architecture of the system 200 is not important and that any combination of computer compatible devices may be incorporated into the system 200 as long as the method 50 can operate on the system 200. Moreover, the program for CPU 202 which causes it to implement the method 50 may be stored in a CD-ROM 210, floppy disk 208, a hard drive or any other medium capable of storing a program. During execution of the program it will be loaded into RAM 216 except for the tracking file, which will reside in the non-volatile memory 207, as controlled by the system's 200 operating system. All of these devices communicate with CPU 202 as is well known in the art.

The CPU 202 performs logical and mathematical operations required by the method of the present invention, such as data manipulation and comparisons, as well as other arithmetic and logical functions generally understood by those of ordinary skill in the art. The RAM 216 is used to store data and program instructions required to implement the method of the present invention and can be comprised of conventional random access memory (RAM), bulk storage memory, or a combination of both, as generally understood by those of ordinary skill in the art. As noted above, the non-volatile memory 207 may be used to store the tracking file and any other information required to maintain its state after restart or power-down conditions. The I/O devices 212, 214 are responsible for interfacing with an operator of the system 200 and for example, may be a keyboard, mouse, display, etc. or with peripheral data devices such as a hard drive or other device (not shown) to receive or distribute data as generally understood by those of ordinary skill in the art.

Fig. 5 illustrates a connection between a customer computer system 200 and a software provider server computer 240 over the Internet 230. This connection is useful, for example, for transferring the demonstration program or the actual program to the customer. It is also useful for providing a mechanism where the track file can be located on the provider server computer 240. Having the tracking file located on the provider server computer 240 allows for easy modification of the evaluation time in the event that the user wishes to purchase more time without the purchase of the entire package. This also allows for keeping track of the time already used when a user re-installs the program due to a system crash or a new computer purchase. This can be accomplished when the user requests more time from the provider and the provider satisfies the request by altering the runtime usage and terminator entries of the tracking file in accordance with the new agreed upon evaluation time. The alteration can be done on a pay-basis, thus effectively making the demonstration program into a license between the parties. Similarly, the connection illustrated in Fig. 5 makes software updates and the registration process more convenient.

As is known in the art, a push/pull method can be used to ensure that the tracking file accurately reflects the user's runtime usage. That is, the user's computer system 200 would have a local tracking file so that the method 50 can properly monitor and update the runtime usage, and prohibit the execution of the demonstration program if needed. In addition, the provider's server computer 240 could contain a copy of the tracking file as well to allow execution if Internet access is dysfunctional. The provider's tracking file can be updated by periodically pulling (via the Internet 230) the tracking file from the user computer system 200. Similarly, any updates made by the provider can be transmitted to the user by pushing the tracking file (via the Internet 230) to the customer computer system 200. The push/pull operations are conventional operations used today by most Internet Service Providers (ISPs) and by the latest operating systems for software integration and updates.

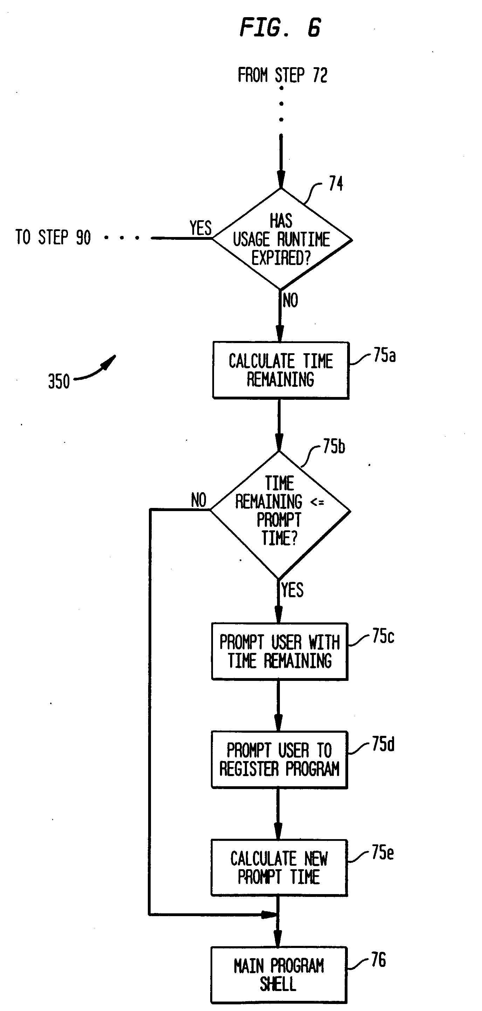

Fig. 6 illustrates in flowchart form an exemplary method 350 of monitoring the runtime usage of demonstration software according to another embodiment of the present invention. The majority of the method 350 is the same as the method 50 (Figs. 3a and 3b) and is not discussed further. However, a new series of steps, steps 75a through 75e are inserted between steps 74 and 76. These new steps will prompt the user when the runtime usage approaches the evaluation time limit.

Initially, if at step 74 it is determined that the runtime usage has not expired, the demonstration time remaining, i.e., the evaluation time limit minus the actual runtime usage, is calculated at step 75a. A step 75b it is determined if the time remaining is less than or equal to a predetermined time remaining prompt time. The prompt time, for example, can initially be set to an hour. It will vary depending upon the length of the evaluation time. That is, if the evaluation time is very long, e.g., a thousand hours, the prompt time may be set to 50 hours. Similarly, if the evaluation time is relatively short, a shorter prompt time may be chosen.

If at step 75b it is determined that the time remaining is not less than or equal to the prompt time, the method 350 continues at step 76 (explained above with reference to Fig. 3b). If it is determined that the time remaining is less than or equal to the prompt time, the method 350 continues at step 75c. At step 75c, the user is prompted with the time remaining. At step 75d, the user may also be prompted to register the demonstration program. At step 75e, if desired, a new prompt time is calculated. A new prompt time is calculated to prevent the user from continuously being prompted that the time is running out once the original prompt time has been reached. Thus, the prompt time should be set to zero to effectively disable the prompt (since it has been scheduled to a time when the runtime usage has expired) or to another suitable time that will not frustrate the user. Once the new prompt time is calculated, the method 350 continues at step 76 (explained above with reference to Fig. 3b).

It should be appreciated that the software instructions required to implement the method of the present invention can reside on a mainframe or server computer. The instructions can then be downloaded into the user computer system over the computer bus and the CPU can execute the instructions implementing the method of the present invention.

It must be noted that the present invention is implemented as a program which gets executed on a computer system. The invention can be written in different computer languages for different computer systems. The present invention can be stored on any suitable storage medium such as a hard drive, floppy disc, CD-ROM or other permanent or semi-permanent storage medium known or yet to be developed. The program embodying the present invention can also be divided into program code segments, downloaded, for example, from a server computer or transmitted as a data signal embodied in a carrier wave as is known in the art.

While the invention has been described in detail in connection with the preferred embodiments known at the time, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Accordingly, the invention is not to be seen as limited by the foregoing description, but is only limited by the scope of the appended claims.

What is claimed as new and desired to be protected by Letters Patent of the United States is:

## Claims

1. A method of monitoring runtime usage of an executing software application having a runtime deadline, said method comprising the steps of:
inputting a time parameter representing runtime of the executing software, the time parameter representing the runtime since the software began its current execution;
updating an accumulated runtime usage with the input time parameter; and
determining if the accumulated runtime time has exceeded the runtime deadline.

2. The method of claim 1 wherein said method further comprises prohibiting the further execution of the software application if it is determined that the accumulated runtime time has exceeded the runtime deadline.

3. The method of claim 1 wherein said method further comprises prompting a user of the software application to register the software application if it is determined that the accumulated runtime time has exceeded the runtime deadline.

4. The method of claim 3 wherein said method further comprises prohibiting the further execution of the software application if the user does not register the software.

5. The method of claim 3 wherein if it is determined that the user wants to register the software said method further comprises the steps of:
inputting a registration identification code;
validating the registration code; and
if the registration code is valid, terminating said method.

6. The method of claim 1 wherein said inputting step through said determining step are performed periodically at a predetermined rate.

7. The method of claim 1 wherein said method stores the accumulated runtime usage in a data file on a computer readable storage medium.

8. The method of claim 7 wherein said method encodes the accumulated runtime usage and stores the encoded accumulated runtime usage in the computer readable storage medium.

9. The method of claim 8 wherein said method further comprises the steps of:
determining if the accumulated runtime usage has been altered by a user; and
if said accumulated runtime usage has been altered by the user, prohibiting the further execution of the software application.

10. The method of claim 7 wherein the computer readable storage medium is connected to a computer system executing the software via a network.

11. The method of claim 10 wherein the network is the Internet.

12. The method of claim 11 wherein said method further comprises the step of extending the deadline when one or more predetermined conditions are present.

13. The method of claim 12 wherein said extending step comprises:
altering the stored accumulated runtime usage; and
transmitting the new stored accumulated runtime usage from the computer storage medium to the computer system executing the software application.

14. The method of claim 12 wherein the one or more predetermined conditions include receiving an extension command.

15. The method of claim 1 wherein said inputting step is performed by reading a clock of a computer processing unit executing the software application.

16. The method of claim 1 wherein said method is performed by the executing software application being monitored.

17. A computer program product stored on a computer usable medium comprising computer readable program means for causing a computer to perform a method as claimed in any of claims 1 to 16.

18. A computer program product directly loadable into the internal memory of a digital computer comprising code for performing a method as claimed in any of claims 1 to 16 when said product is run on a computer.
